# EUROPEAN PATENT APPLICATION

(11) **EP 0 692 794 A1**
(43) Date of publication of application: **17.01.1996**
(21) Application number: 95304462.5
(22) Date of filing: 26.06.1995
(51) Int. Cl.: G21C 3/344, G21C 3/322

(54) **Nuclear fuel bundle with spacers of different configurations**

(30) Priority: 12.07.1994 US 273738
(71) Applicant: GENERAL ELECTRIC COMPANY, Schenectady, NY 12345 (US)
(72) Inventor: Matzner, Bruce, San Jose, California 95124 (US)
(74) Representative: Greenwood, John David

(57) **Abstract**

Ferrule type spacers are spaced one from the other along a nuclear fuel bundle for a boiling water reactor. The ferrules of the spacers in the two-phase region of the BWR are configured to provide high flow resistance and hence low velocity to thicken liquid coolant films about the fuel rods downstream of the spacer to raise critical power performance before a boiling transition occurs. In the lower region of the reactor, the spacers are configured to have a minimum resistance to flow of coolant and hence provide a high velocity flow about the fuel rods immediately downstream of the spacers to avoid a departure from nucleate boiling.

## Description

### RELATED APPLICATIONS

This is a continuation-in-part of application Serial No. 014,608, filed February 8, 1993, having European Patent Application equivalent EP-A-0 611 128 the disclosure of which is incorporated herein by reference.

### TECHNICAL FIELD

This invention relates to fuel bundles in boiling water nuclear reactors or to simulated fuel bundles used in experiments which predict reactor fuel performance.

### BACKGROUND

There are two general types of nuclear reactors: pressurized water reactors (PWR) and boiling water reactors (BWR). Both employ a plurality of fuel bundles each including plural, spaced-apart, vertically upstanding fuel rods. In both types of reactors, a moderator or coolant flows along the vertically upstanding fuel rods and heat is transferred from the fuel rods to the flow. In the BWR, it is necessary that the fuel rods are surrounded by a fuel channel which extends substantially the full height of the fuel rods and confines the flow of the coolant within the fuel bundle around the heat generating fuel rods.

In the pressurized water reactor, the coolant enters and exits the reactor core under single-phase conditions. That is, no net coolant vaporization occurs within the fuel channel. In the boiling water reactor, the coolant also enters the fuel channel under the same single-phase condition. However, net coolant vaporization occurs and steam is present in the exit coolant flow. Consequently, from a thermal hydraulics point of view, the PWR may be characterized as a single-phase reactor, whereas the BWR is a two-phase reactor.

In both systems, the nuclear design and operating dynamics require that the fuel rods are maintained in parallel, side-by-side relation at a designated spatial separation. This prevents abrading contact of the fuel rods and maintains the fuel rods in design separation for maximum nuclear efficiency. To accomplish this, spacers are employed at vertically spaced positions along the fuel bundle. For example, in a typical BWR, seven identical spacers at evenly spaced vertical intervals are typically used along the length of the fuel rods within a fuel bundle. In a preferred design, each spacer includes a plurality of ferrules, each of which individually surrounds and holds in place a specified fuel rod. A typical ferrule spacer is on the order of 1" high, with each ferrule of the spacer defining a plurality of internal stops against which a fuel rod interior of the ferrule is biased. A spring extends into the ferrule generally opposite two pairs of stops and biases the fuel rod at the ferrule into engagement with the stops. Thus, through the combination of both the stops and the spring, fuel rods interior of the ferrules are effectively centered with respect to the ferrule and also prevented from experiencing flow induced vibration (FIV) between the rod and spacer ferrules which could damage the fuel rod cladding. Ferrule type spacers typically are for use only in BWR systems.

Generally, both systems have limiting thermal conditions whereby one or more locations in the fuel rod bundle may overheat relative to the normal steady state fuel rod surface temperatures. In a PWR, this condition is called departure from nucleate boiling (DNB). It represents the fuel bundle power at which so many steam vapor bubbles are generated on the surface of the fuel rod that a portion of the fuel rod effectively is thermally insulated from the passing coolant flow. As a result, fuel rod surface temperatures can rise several hundred degrees Fahrenheit per minute, with fuel rod failure by melting highly probable. DNB failures generally occur in a fuel bundle under conditions of maximum local heat flux and minimum local fluid velocities (relative to bundle average conditions). A way to protect against DNB failure is to provide a uniformly high coolant flow velocity in the vicinity of the flow rod surface. Conversely, a relatively low local velocity of coolant flow in the high heat flux region of the fuel rod may exacerbate any tendency toward DNB failure. By contrast, in a BWR, the limiting thermal condition is called boiling transition (BT) or dryout. It is very important to note though that a BT condition has never been encountered in an operating nuclear reactor. This event, however, is regularly observed in out of reactor tests designed to measure BT performance. This mechanism is entirely different from DNB. More specifically, in a BWR, there are two general types of coolant flow regions within the fuel bundle, an inlet single-phase region, followed by a low void fraction two-phase region where liquid is the continuous flowing fluid, and an upper two-phase region where vapor is the continuous flowing fluid. This region is also called the annular flow regime. This two-phase flow region is a zone in the fuel bundle where the flow of generated steam with dispersed liquid droplets occupies the open region between the rods, while slower-moving liquid films coat all solid surfaces. More specifically, the vapor flow is continuous and flows at a higher velocity than the liquid.

In the annular flow regime, there are two sources of liquid available to cool the fuel rods, i.e., liquid film flow and dispersed liquid droplets. A fuel rod cooled in the annular flow regime generally has a thin film (<0.06'') of liquid. Heat conduction through this liquid film causes direct vaporization from the surface of the film. In the annular flow region of a BWR, a BT or dryout occurs when the film thickness tends toward and becomes zero. Upon rupture or disappearance of the thin film, the only source of coolant for the fuel rod cladding is from impinging liquid droplets. Thus, liquid droplet deposition affords cooling, albeit reduced, of the dried-out surface of the fuel rod cladding. A relatively benign temperature rise does occur locally with the possibility that cladding eventually would be seriously damaged by accelerated corrosion and eventually perforated. The rate of temperature rise on the fuel rod surface caused by BT is considerably less severe than caused by DNB. This is both because the local heat flux at the BWR fuel rod location of overheating is about half as high as the corresponding PWR fuel rod and also the BWR dry rod surface is being cooled by liquid droplets entrained in the steam vapor flowing around the fuel rods. Additionally, fuel bundles are limited in their heat-generating operation to power levels below those power levels where such dryout can statistically occur. Hence, BT will not cause immediate fuel rod failure.

BWR spacers are designed to enhance thermal performance in the annular flow region. Particularly, ferrule spacers are designed to thicken the downstream liquid film coating in the annular flow regime in the upper two-phase region of a BWR. This thickening of the film coating allows normal operation of fuel bundles incorporating ferrule spacers at power generation rates exceeding those fuel bundles having many other different type spacers. As a consequence, such ferrule spacers are utilized with increasing frequency since they provide additional operating margin before a dryout condition occurs. The focus for the design of spacers in BWR's has therefore been to design spacers which would minimize the possibility of a dryout occurring in the two-phase region. Hence, the spacers have been designed to afford a thickening of the liquid film along the heat flux generating surface of the fuel rod, a high flow resistance and a reduced velocity enabling the thickening of the liquid film.

The design of spacers to protect against BT has not, however, heretofore focused on the effect of that spacer design in the single-phase or bubble flow regions of BWR fuel. Thus, a BWR bundle with spacers designed and optimized for BT performance may also be prone to DNB-type fuel rod failures in the lower fuel region single-phase and low steam quality coolant flows. Indeed, it has been discovered during BWR simulation testing that at certain extreme conditions, departure from nuclear boiling (DNB) failures may be experienced in the single-phase/low quality region. Thus, DNB failures, which normally affect PWR's, were surprisingly discovered experimentally as applicable in the inlet region of a BWR. Consequently, while the ferrule spacers may be significantly better than other BWR spacer designs, e.g. egg crate or unit cell, in the annular flow region at the top of the fuel bundle where BT occurs, it was discovered that such improved BT performance spacers might be poor critical power performers when used at one or more elevations adjacent the bottom of a BWR where a DNB failure mode may exist. It was thus realized that both the high heat flux and low local velocity flow (high local flow resistance) typical of a DNB failure may be present at the lowermost spacer locations in the single-phase/ low quality regime of the BWR. The high heat flux typically could be due to an inlet peaked axial heat flux shape, while the low velocity could be caused by the geometrical characteristics of the ferrule spacers. This combination could create an obstruction close to the fuel rod which reduces the liquid velocity immediately downstream of each ferrule whereby at least one of the conditions necessary for a DNB failure is created.

It will be appreciated that departure from nucleate boiling although only encountered in simulated experiments and never in an operating BWR would be a particularly serious phenomenon. When this condition occurs, steam accumulates on the surface of the fuel rod so rapidly that the surrounding water flow is unable to sweep or move the generated steam from the fuel rod. The cladding of the fuel rod is locally shrouded in a vapor blanket which results in rapid overheating of the fuel rod and can cause concurrent damage to the cladding.

The present invention, in its several aspects, is as claimed in the claims.

Having now recognized the critical power performance of typical ferrule spacers as being different in the BWR flow regimes controlled by steam bubbles as opposed to the annular flow regime controlled by liquid films, it will be appreciated in embodiments of the present invention, the ferrule spacer construction in the single-phase low steam quality region can be altered to raise the critical power performance limit where DNB occurs. To accomplish this, the ferrule spacers typically used in a BWR and designed to maximize liquid film thickness in the annular flow region are modified to a configuration tending to promote higher velocity of coolant flow around the fuel rods immediately downstream of the bottom ferrule spacer sufficiently to suppress any tendency of the fuel rods at that elevation to be subject to DNB. More particularly, the ferrule spacer typically used over the entire bundle length is modified by removing as much material from the spacer as possible while retaining the necessary structural characteristics of the ferrule spacer with the objective of decreasing the flow resistance and, hence, increasing the fluid velocity in the immediate vicinity of the fuel rod heat transfer surface. By altering the spacer configuration in the inlet region as compared with the spacer configuration higher in the bundle, the spacer in the single-phase region may increase the local liquid flow velocity about the fuel rods to mitigate the DNB failure and thus improve the critical power performance for the entire fuel bundle. Thus, a spacer designed specifically to reduce fluid flow resistance around the fuel rod and hence increase the local velocity of the fluid about the fuel rods in the inlet region of a BWR in comparison with the greater fluid flow resistance and lower local fluid velocity resulting from a typical spacer in the prior art BWR fuel design will prevent the occurrence of the extremely destructive DNB failure in the inlet region before the more benign BT limit is encountered in the upper two-phase region of the fuel bundle.

In a preferred embodiment according to the present invention, there is provided in a boiling water nuclear reactor including a nuclear fuel bundle, the nuclear fuel bundle having in combination a plurality of parallel, vertically upstanding nuclear fuel rods forming a fuel rod bundle, a lower tie plate for supporting the rods and enabling inflow of moderating water coolant and an upper tie plate for joining at least some of the fuel rods. A plurality of spacers are positioned between the upper and lower tie plates at a plurality of vertically spaced locations along the fuel bundle, the spacers each including a plurality of discrete elements about respective fuel rods for locating the fuel rods in the bundle, the elements of at least one of the spacers at one elevation thereof above a bottom spacer and in a two-phase region of the reactor having a configuration tending to thicken a coolant film about the fuel rods downstream of the one spacer, thereby minimizing or preventing the occurrence of boiling transition in the two-phase region and enhancing power generation rates for the fuel bundle. The elements of a spacer below the one spacer and in a single-phase/low-steam quantity region of the reactor having a configuration tending to promote high velocity of coolant flow locally about the fuel rods immediately downstream thereof sufficiently to suppress any tendency of the fuel rods at that elevation to be subject to departure from nucleate boiling, the elements of the one spacer and the spacer below the one spacer being of different configuration.

In a further preferred embodiment according to the present invention, there is provided in a boiling water nuclear reactor including a nuclear fuel bundle, the nuclear fuel bundle comprising a plurality of parallel, vertically upstanding fuel rods, a plurality of spacers located at a plurality of vertically spaced locations along the fuel bundle, the spacers each including a plurality of discrete elements encompassing respective fuel rods, the elements of one of the spacers at an elevation above a bottom spacer having a predetermined quantity of material about an encompassed fuel rod, the elements of a spacer adjacent a lower end of the fuel bundle, each having a reduced quantity of material about an encompassed fuel rod in comparison with the quantity of material of the elements of the one spacer.

In a still further preferred embodiment according to the present invention, there is provided spacer for a nuclear fuel bundle having nuclear fuel rods comprising a plurality of ferrules, each ferrule having upper and lower rings interconnected by one or more side wall portions of the ferrule, the side wall portion or the aggregate of side wall portions extending circumferentially about the ferrule a distance substantially no greater than about one-quarter of the circumference of the rings thereby defining a large flow aperture through the ferrule and maximizing the fluid velocity distribution of the coolant relative to the surface of a fuel rod immediately downstream of the ferrule, each ferrule further defining at least one stop to permit a fuel rod interior of the ferrule defining at least one stop to permit a fuel rod interior of the ferrule to be biased into contact with the stop to maintain the fuel rod in spaced apart relation with respect to the ferrule, a spring carried by and interior to the ferrule for biasing the fuel rod in the ferrule into the stop to maintain spatial separation between the fuel rod and the sides of the ferrule.

In a still further-preferred embodiment according to the present invention, there is provided a method of operating a boiling water nuclear reactor having fuel bundles, a plurality of nuclear fuel rods in each bundle and spacers in each bundle at different elevations along the fuel bundle comprising the steps of providing a spacer at one elevation along the fuel bundle and in a two-phase region of the reactor having spacer elements configured to promote the thickness of a coolant film about the fuel rods downstream of the spacer at the one elevation, providing a spacer at an elevation along the fuel bundle below the one elevation and in a single-phase region of the rector having spacer elements configured to promote high velocity of coolant flow locally about the fuel rods immediately downstream thereof so that any tendency toward departure from nuclear boiling is suppressed, the configurations of the spacers in the single-phase and the two-phase regions being different from one another.

In a still further preferred embodiment according to the present invention, there is provided in a nuclear reactor simulation facility, including a simulated nuclear fuel bundle, the simulated nuclear fuel bundle having in combination a plurality of parallel, vertically upstanding electrically activated heater rods simulative of nuclear fuel rods forming a simulated fuel rod bundle, a plurality of spacers positioned at a plurality of vertically spaced locations along the simulated fuel rod bundle, the spacers each including a plurality of discrete elements about respective heater rods for locating the heater rods in the bundle, the elements of at least one of the spacers at one elevation thereof above a bottom spacer and in a simulated two-phase region of a nuclear reactor having a configuration tending to thicken a coolant film about the heater rods downstream of the one spacer, thereby minimizing or preventing the occurrence of boiling transition in the simulated two-phase region and simulating enhanced critical power performance for the fuel bundle, the elements of a spacer below the one spacer and in a simulated single-phase region of a simulated nuclear reactor having a configuration tending to promote high velocity of coolant flow locally about the heater rods immediately downstream thereof sufficiently to suppress any tendency of the heater rods at that elevation to be subject to simulated departure from nucleate boiling, the elements of the one spacer and the spacer below the one spacer being of different configuration.

In a still further preferred embodiment of the preferred invention, there is provided a method of operating a simulated boiling water nuclear reactor having heater rod bundles, a plurality of heater rods in each bundle and spacers in each bundle at different elevations along the bundle comprising the steps of providing a spacer at one elevation along the bundle and in a simulated two-phase region of a nuclear reactor having spacer elements configured to promote the thickness of a coolant film about the heater rods downstream of the spacer at the one elevation and providing a spacer at an elevation along the bundle below the one elevation and in a simulated single-phase region of the reactor having spacer elements configured to promote high velocity of coolant flow locally about the heater rods immediately downstream thereof so that any tendency toward simulated departure from nucleate boiling is suppressed, the configurations of the spacers in the simulated single-phase and the simulated two-phase regions being different from one another.

Accordingly, it is a primary object of the present invention to provide spacers for a BWR or a BWR simulator designed specifically for use in the single-phase/very low quality and the higher quality annular flow regions which will prevent the occurrence of a departure from nucleate boiling failure in the single-phase region-before a boiling transition limit is encountered in the two-phase region. These spacers may be of a modified ferrule design or they may also be of the standard egg crate or unit cell designs, both of which have superior DNB performance that the standard ferrule spacer design.

### BRIEF DESCRIPTION OF THE DRAWINGS

FIGURE 1 is a perspective view of a nuclear fuel bundle illustrating the ferrule spacers of this invention;
FIGURE 2A is a perspective view of a ferrule spacer of the prior art;
FIGURE 2B is a typical perspective view of two ferrules utilized in the ferrule spacer of Figure 2A;
FIGURE 3A is a side elevation view of a ferrule according to this invention illustrating typical large apertures defined in the ferrule sides for placement in one or more of the ferrule spacers adjacent the bottom portion of the fuel bundle illustrated in Figure 1;
FIGURE 3B is a plan view of the spacer configuration of Figure 3A;
FIGURE 3C is a perspective view of two ferrules according to this invention being placed around two respective fuel rods illustrating large open areas for the suppression of the departure from nucleate boiling (DNB);
FIGURE 4 is a side elevational view of a pair of ferrules according to a further embodiment of the present invention and taken about on line 4-4 in Figure 5;
FIGURE 5 is a cross-sectional view thereof taken generally about on line 5-5 in Figure 4;
FIGURE 6 is a cross-sectional view thereof taken generally about on line 6-6 in Figure 5;
FIGURES 7A & 7B are fragmentary plan and side electional views, respectively, of an egg crate design;
FIGURES 8A & 8B are fragmentary plan and side elevational views, respectively, of a unit cell design; and
FIGURE 9 is a schematic representation of a plurality of heater rods disposed in a pressure vessel simulating a nuclear fuel bundle.

### DESCRIPTION OF THE PREFERRED EMBODIMENT

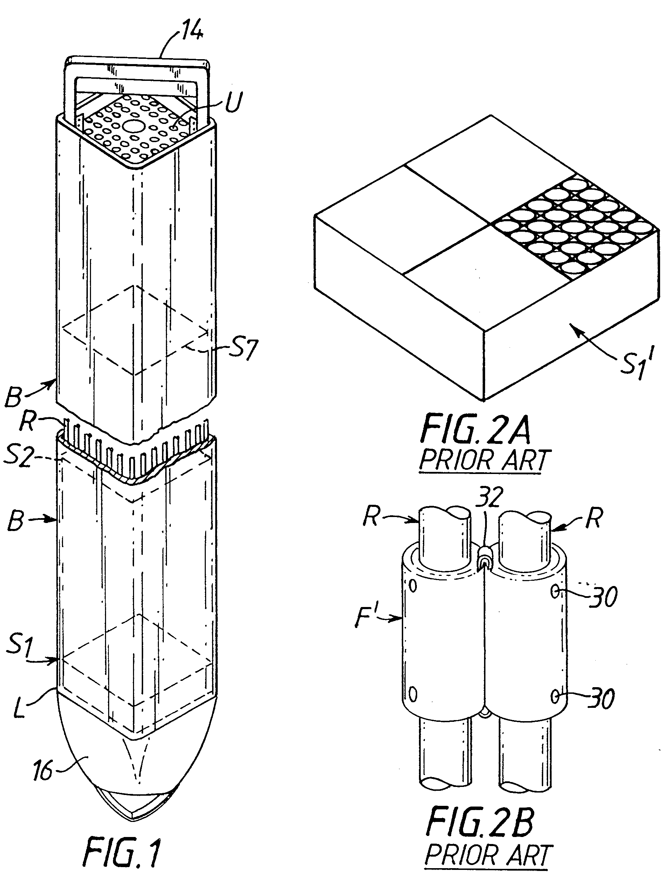

Referring to Figure 1, a fuel bundle B is illustrated in perspective, the view showing the top and bottom portions of the fuel bundle with the middle section missing. In the disclosed fuel bundle, a 10 by 10 matrix of fuel rods R are held in vertical upstanding relationship between lower tie plate L and upper tie plate U. (The present invention is applicable to other matrices of fuel rods, e.g., 8x8 or 9x9 matrices). A bail 14 is used for raising and lowering the fuel bundle with a lower tapered end piece 16 for fitting to the reactor fueled support structure (not shown).

As has previously been described, typically a fuel bundle B includes seven spacers S₁-S₇. Typically, these respective spacers S₁-S₇ are distributed from the bottom to the top of the fuel bundle B at substantially even intervals. In the example given here, the spacers are numbered in the direction of fluid flow; spacer S₁ is at the bottom with spacer S₇ at the top.

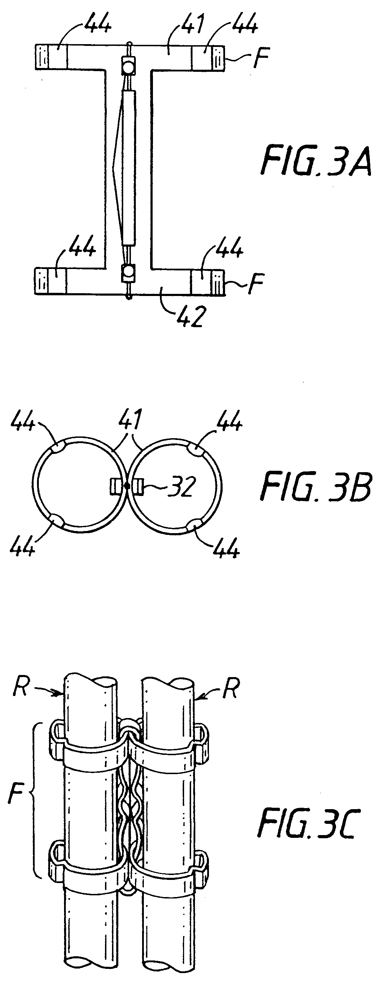

Referring to Figures 2A and 2B, the construction of a typical ferrule spacer for a boiling water reactor is shown and in surrounding relation to a fuel rod R (See Figure 2B). Each spacer defines solid stops 30 against which fuel rods R are biased by an inserted Inconel leaf spring 32. As is well known, the combination of the stops 30 and spring 32 serves to center fuel rods R within conventional ferrules F'. As shown in Figure 2A, when spring 32 biases fuel rod R against stops 32, centering of rod R occurs with respect to ferrule F'.

Typically, ferrules F' are manufactured of Zircaloy, a zirconium alloy. This metal has a low neutron cross-section and, therefore, is a preferred material for use in the manufacture of such spacers.

Heretofore, in known applications of ferrule spacers in a BWR, the same ferrule spacer construction has been used from the bottom of the fuel bundle B at spacer S₁ to the top of the fuel bundle B as spacer S₇. As discussed, it has been discovered experimentally that the presence of a ferrule F' in the position of spacer S₁ can lead to departure from nucleate boiling (DNB) under extreme, probably unattainable, BWR operating conditions. This in turn can lead to a rapid cladding overheating. Specifically, even though the surrounding liquid is predominantly liquid phase, a vapor blanket can form locally over the outside surface of the fuel rod R thermally insulating it from the coolant. Destruction of the cladding can occur rapidly and has been observed in test simulation where such extreme conditions are routinely simulated in order to discover ultimate fuel performance limits.

The spacers typically employed in the BWR are designed for the upper two-phase region or annular flow regime. As explained, in this regime, a BT or dry out occurs when the film thickness tends toward zero exposing the fuel rod cladding only to passing vapor droplet mixtures. When this occurs, the rate of temperature rise on the fuel rod surface increases but at a considerably lower rate than in a DNB. Consequently, the prior art focus as evidenced by Figures 2A and 2B, has been to design ferrule spacers for thickening the downstream liquid film coating along the heat generating surface of the fuel rod in the annular flow regime in the upper two-phase region of the BWR. It has been discovered experimentally, however, that use of those designs to improve BT performance in the inlet region of the BWR cannot continue indefinitely because a DNB type failure will eventually occur. Recognizing this potential for DNB type failure in the inlet region of the BWR, the present invention provides a different type of spacer ferrule in the lowermost spacer or spacers in the single-phase/low steam quality region which will promote higher velocity of coolant flow around the fuel rods immediately downstream of the ferrule spacers sufficient to suppress any tendency of the fuel rods at that elevation to be subject to DNB particularly as compared with ferrule spacers employed in the annular flow regime. Standard egg crate and unit cell spacer designs can also be used to suppress the DNB tendency. Consequently, the typically employed spacer ferrules for the two-phase region are modified to reduce fluid flow resistance around the fuel rod and increase the local liquid flow velocity about the fuel rods to mitigate DNB failure hence preventing the occurrence of a departure from nucleate boiling failure in the inlet region before a boiling transitional limit is encountered in the annular flow region. This concept is of particular value in fuel simulating experiments where beyond reaction conditions are routinely investigated.

To accomplish this, and referring to a first embodiment of the present invention shown in Figures 3A-3C, there is illustrated a spacer element, in this form, a ferrule having as much of its surface removed as is consistent with ferrule structural requirements. Thus, upon comparing Figures 2 and 3, it will be appreciated that material between an upper ring 41 and a lower ring 42 of each spacer ferrule has been removed, leaving only a side wall 43 interconnecting the rings 41 and 42. Preferably, only one side wall 43 is provided, although two or more side walls of narrow configuration may be used at circumferentially spaced locations about the ferrule to interconnect the upper and lower rings 41 and 42. The side wall or walls in the aggregate should have an amount of material sufficient only to structurally enable the ferrule to confine the fuel rod in the ferrule and maintain it spaced from adjacent fuel rods. Preferably, the side wall 43 or walls in the aggregate should extend circumferentially about the ferrule a distance substantially no greater than about one-quarter of the circumference of the rings 41 and 42. Also, for a distance more than one-half the length of the ferrule between the rings 41 and 42, approximately three-quarters of the material which would otherwise form part of a complete circular ferrule is removed. This results in a spacer ferrule useful in the single-phase/low steam quality region of the BWR affording increased local velocity about the fuel rods (low resistance to flow) and enabling a raise in critical power performance before a departure from nucleate boiling occurs. Additionally, typical spacers such as those disclosed in Figure 2, and normally used throughout the fuel bundle, are formed of an alloy of zirconium, namely Zircaloy, the spacers in the single-phase region may be formed of Inconel. Inconel is the preferred material because of its high strength and, because of the reduced quantity of material. The -greater neutron absorption cross-section of Inconel does not significantly detract from the performance of the bundle in the BWR if the Inconel spacer has a sufficiently low mass of Inconel. The upper and lower rings 41 and 42 have radially inward directed springs 44 which, in conjunction with central spring 32, locate the fuel rod centrally of the ferrule.

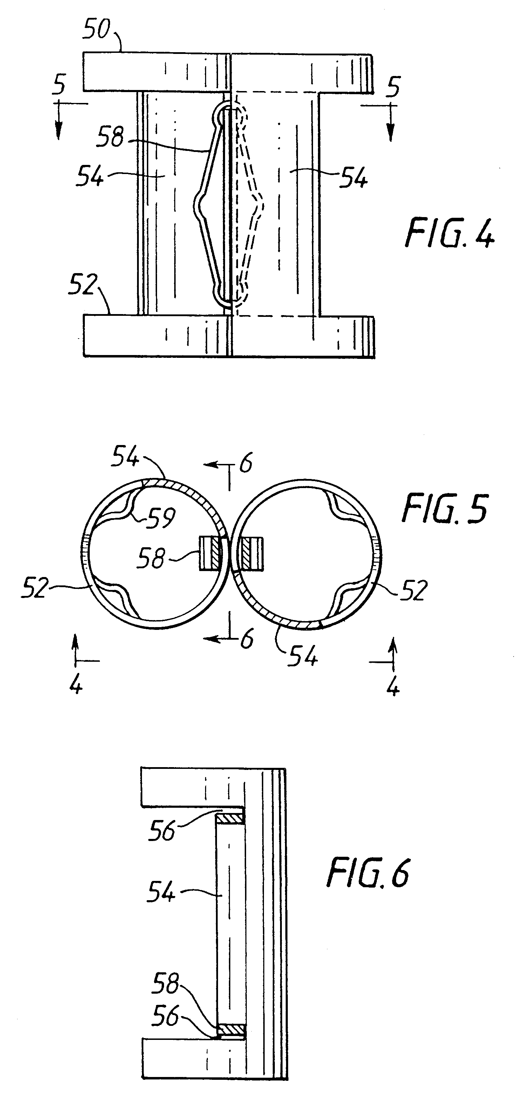

Referring now to Figures 4 and 5 there is illustrated a spacer element, in this further form, a ferrule according to a further embodiment of the present invention of which may also be formed of Inconel. In Figures 4 and 5, the spacer includes a pair of butting ferrules joined, for example, at top and bottom by weldments. Each ferrule is generally cylindrical in configuration for receiving a fuel rod and the ferrules may be disposed within a peripheral band of the spacer, not shown but described and illustrated in U.S. Patent No. 4,508,679, the disclosure which is incorporated herein by reference.

In the spacer ferrules of Figures 4 and 5, upper and lower rings 50 and 52 are formed by removing approximately three-quarters of the material of the generally cylindrically shaped ferrules between the rings 50 and 52, leaving a side wall portion comprised of a pair of tabs 54 on each ferrule extending in opposite circumferential directions. Because of its greater structural strength, more material can be removed from an Inconel version of the ferrule spacer than from the Zircaloy version. Thus, for a distance more than one-half of the ferrule, i.e., between the upper and lower rings 50 and 52, approximately three-quarters of the material which would otherwise form part of a complete circular ferrule has been removed. The spacer of Figures 4 and 5 are therefore similar in these respects to the spacers of Figures 3A-3C. The tabs 54 are defined by slots 56 adjacent the upper and lower rings of the ferrules. A spring 58 having arched upper and lower ends is received in the slots 56 and is supported in the ferrules by the tabs 54 of the adjoining ferrules. The ferrules are therefore joined one to the other similarly as the ferrules of U.S. Patent No. 4,508,679 referenced above, the disclosure of which is incorporated herein by reference.

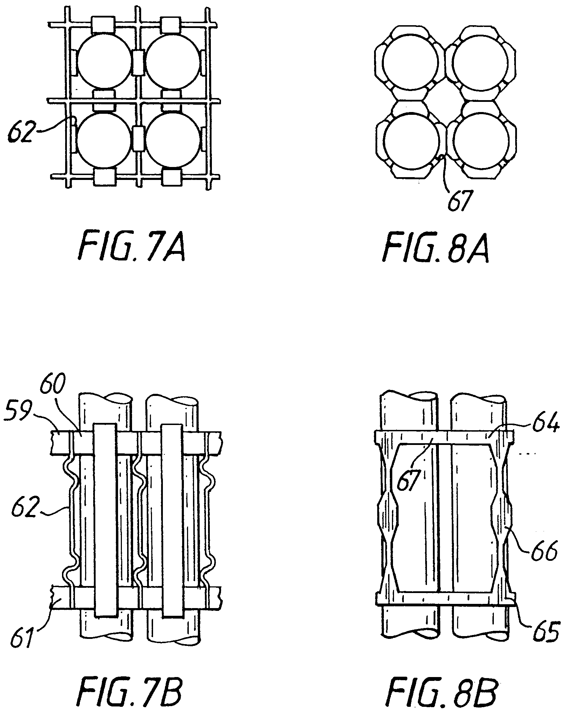

In the foregoing description, and for a given material thickness, there is a greater quantity of material removed from the otherwise generally cylindrical ferrules than remains in the ferrules, hence affording reduced flow resistance, and increased local flow velocity about the fuel rods, while substantially maintaining average flow velocity past the fuel rods. Thus, the velocity distribution within the sub-channels between the fuel rods is changed by increasing the local velocity of flow about the fuel rods while substantially maintaining average flow velocity. It will also be appreciated that, in addition to spacer elements having reduced material as described, egg crate or unit cell type spacers, as illustrated in Figures 7 & 8, may also be used in the single-phase region to increase local flow velocity about the fuel rods and reduce flow resistance in comparison with other types of spacers used in the annular flow regime which generally is provided to reduce local flow velocity by increasing flow resistance. Thus, in Figures 7A & 7B, egg crate type spacers 59 are illustrated and which have upper orthogonally related bands 60 defining an upper generally square aperture and lower orthogonally related bands 61 defining a lower generally square aperture interconnected along their linear sides by vertically extending spring members 62. Thus, a fuel rod is centered within the square apertures as illustrated and braised into such centered position by spring members 62. Figures 8A & 8B, unit cell spacers 63 are illustrated. Each unit cell includes generally octogonally shaped upper and lower bands 64 and 65, respectively, interconnected by a pair of spring elements 66 located along adjoining right-anularly related sides of the unit cell. Opposite those spring elements 66, the sides of the bands have inwardly directed stops 67. Fuel rods are thus centrally located by the spring elements 66 and stops 67.

Accordingly, the spacers at the different elevations along the fuel bundle are formed differently consistent with their location in the single-phase or two-phase regions of the BWR. With minimum ferrule material, affording reduced flow resistance and increased local velocity about the fuel rods, the spacers of Figures 3-8 are employed in the lower single-phase region while the conventional spacers are used in the two-phase region. With this design and location, the occurrence of the extremely destructive DNB failure in the lower single-phase region will be prevented before the more benign BT limit is encountered in the upper two-phase region of the bundle.

In present-day nuclear fuel bundle simulators, heating elements are employed in a closed vessel containing a coolant. Total bundle power is matched with anticipated nuclear fuel bundle limiting power conditions and the result of the tests can be used to predict various reactor conditions. Thus, out-of-pile experimental boiling water test facilities are frequently used to obtain data and experience simulative of nuclear reactor operation, e.g., in operational regions beyond those which would typically occur in a nuclear reactor. For example, in normal BWR bundle operations, 4-5 megawatts of power are typical. In tests simulating BWR reactors, the simulating BWR bundle may be taken up as high as 12 megawatts to determine extreme performance limits. The previously mentioned DNB type failure in a BWR occurred in the test facility in the 10-12 megawatt range. As will be appreciated, the testing facility simulates the reactor fuel bundle with rods and channel all having prototypical dimensions geometrically. The rods are electrically heated and designed to generate heat flux distributions, both axial and radial, typical of reactor fuel bundles and tests are performed over a full range of potential fuel operating states, both steady state and transient. The test arrangement described above and in particular this arrangement of the spacers and configurations of the elements of the spacers are useful in these test facilities. As will be appreciated, the electric heater rods of the test bundles being of less mass and heat capacity than reactor fuel rods, will heat up much more rapidly than fuel rods and failure conditions will be approached more rapidly, thus making the margin for failure smaller as compared with reactor fuel rods.

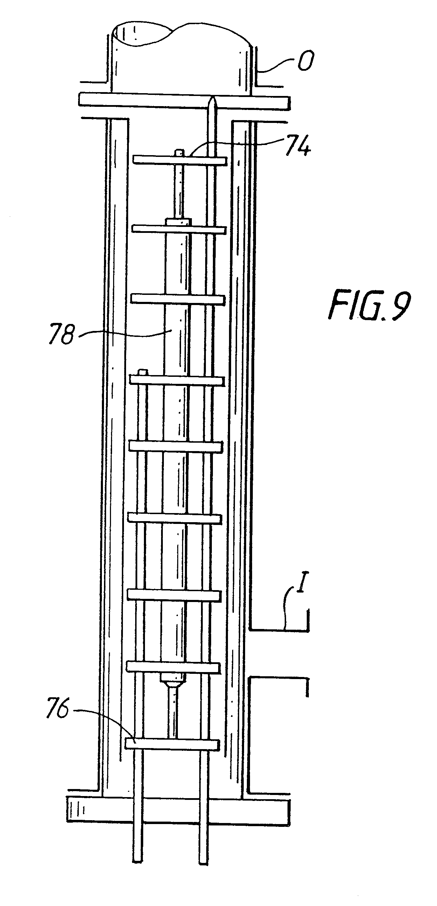

Referring now to Figure 9, there is illustrated a closed pressure vessel 70 having a coolant, for example, water for flow, within the vessel 70 between a water inlet I and an outlet O. Heating elements 71 are disposed within the vessel 70 in contact with the coolant. These heating elements may comprise single-ended or double-ended electrical heater rods. Spacers 72 are employed in the simulated fuel bundle of the heater rods at spaced elevations one from the other. Upper and lower tie plates 74 & 76 are simulated and a central water rod 78 is provided. It will be appreciated that electrical power is supplied to the heating elements whereby simulated nuclear reactor conditions may be tested in the facility.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. In a boiling water nuclear reactor including a nuclear fuel bundle, said nuclear fuel bundle having in combination:
a plurality of parallel, vertically upstanding nuclear fuel rods forming a fuel rod bundle;
a lower tie plate for supporting said rods and enabling inflow of moderating water coolant;
an upper tie plate for joining at least some of the fuel rods;
a plurality of spacers positioned between said upper and lower tie plates at a plurality of vertically spaced locations along the fuel bundle, said spacers each including a plurality of discrete elements about respective fuel rods for locating the fuel rods in said bundle, the elements of at least one of said spacers at one elevation thereof above a bottom spacer and in a two-phase region of the reactor having a configuration tending to thicken a coolant film about the fuel rods downstream of said one spacer, thereby minimizing or preventing the occurrence of boiling transition in said two-phase region and enhancing power generation rates for the fuel bundle, the elements of a spacer below said one spacer and in a single-phase/low-steam quantity region of the reactor having a configuration tending to promote high velocity of coolant flow locally about the fuel rods immediately downstream thereof sufficiently to suppress any tendency of the fuel rods at that elevation to be subject to departure from nucleate boiling, the elements of said one spacer and said spacer below said one spacer being of different configuration.

2. A nuclear fuel bundle according to Claim 1 wherein the configuration of the elements of said one spacer at said one elevation thereof affords a greater resistance to flow of coolant than the configuration of the elements of the spacer below said one spacer.

3. A nuclear fuel bundle according to Claim 1 wherein each said element comprises a ferrule having at least one stop to permit a fuel rod interior of said ferrule to be biased into contact with said stop to maintain said fuel rod spaced from said ferrule, and a spring interior of said ferrule for biasing said fuel rod in said ferrule into said stop whereby said fuel rod is maintained in spatial separation with respect to sides of said ferrule.

4. A nuclear fuel bundle according to Claim 1 wherein each element comprises a ferrule, each ferrule of the spacer below said one spacer having a magnitude of material forming the ferrule less than the magnitude of material forming each of the ferrules of said one spacer.

5. A nuclear fuel bundle according to Claim 1 wherein the spacer below said one spacer constitutes a bottom spacer of said plurality of spacers.

6. In a boiling water nuclear reactor including a nuclear fuel bundle, said nuclear fuel bundle comprising:
a plurality of parallel, vertically upstanding fuel rods;
a plurality of spacers located at a plurality of vertically spaced locations along the fuel bundle, said spacers each including a plurality of discrete elements encompassing respective fuel rods, the elements of one of said spacers at an elevation above a bottom spacer having a predetermined quantity of material about an encompassed fuel rod, the elements of a spacer adjacent a lower end of said fuel bundle, each having a reduced quantity of material about an encompassed fuel rod in comparison with the quantity of material of the elements of said one spacer.

7. A nuclear fuel bundle according to Claim 6 wherein the configuration of the elements of said one spacer affords a greater resistance to flow of coolant than the configuration of the elements of the spacer adjacent the lower end of said fuel bundle.

8. A nuclear fuel bundle according to Claim 6 wherein each said element comprises a ferrule having at least one stop to permit a fuel rod interior of said ferrule to be biased into contact with said stop to maintain said fuel rod spaced from said ferrule, and a spring interior of said ferrule for biasing said fuel rod in said ferrule into said stop whereby said fuel rod is maintained in spatial separation with respect to the sides of said ferrule.

9. A nuclear fuel bundle according to Claim 6 wherein the elements of the spacer adjacent the lower end of said fuel bundle have a configuration tending to promote high velocity distribution of coolant flow locally about the fuel rods and past the spacer, the configuration of the elements of said one spacer having a configuration tending to produce a velocity flow of coolant locally about the fuel rods and past the one spacer less than the velocity flow of coolant past the spacer adjacent the lower end of said fuel bundle.

10. A nuclear fuel bundle according to Claim 6 wherein each spacer element of the spacer adjacent a lower end of the fuel bundle has upper and lower rings interconnected by one or more side wall portions, said side wall portion or the aggregate of said side wall portions extending circumferentially about the spacer element a distance substantially no greater than about one-quarter of the circumference of said element thereby defining a large flow aperture through said element maximizing the fluid velocity distribution of coolant flow relative to the surface of a fuel rod encompassed by said element immediately downstream of the element.

11. A spacer for a nuclear fuel bundle having nuclear fuel rods comprising:
a plurality of ferrules;
each ferrule having upper and lower rings interconnected by one or more side wall portions of the ferrule, said side wall portion or the aggregate of side wall portions extending circumferentially about the ferrule a distance substantially no greater than about one-quarter of the circumference of said rings thereby defining a large flow aperture through the ferrule and maximizing the fluid velocity distribution of the coolant relative to the surface of a fuel rod immediately downstream of said ferrule;
each said ferrule further defining at least one stop to permit a fuel rod interior of said ferrule defining at least one stop to permit a fuel rod interior of said ferrule to be biased into contact with said stop to maintain the fuel rod in spaced apart relation with respect to said ferrule;
a spring carried by and interior to said ferrule for biasing the fuel rod in said ferrule into said stop to maintain spatial separation between the fuel rod and the sides of said ferrule.

12. A method of operating a boiling water nuclear reactor having fuel bundles, a plurality of nuclear fuel rods in each bundle and spacers in each bundle at different elevations along said fuel bundle comprising the steps of:
providing a spacer at one elevation along said fuel bundle and in a two-phase region of the reactor having spacer elements configured to promote the thickness of a coolant film about the fuel rods downstream of the spacer at said one elevation;
providing a spacer at an elevation along said fuel bundle below said one elevation and in a single-phase region of the rector having spacer elements configured to promote high velocity of coolant flow locally about the fuel rods immediately downstream thereof so that any tendency toward departure from nuclear boiling is suppressed, the configurations of the spacers in said single-phase and said two-phase regions being different from one another.

13. In a nuclear reactor simulation facility, including a simulated nuclear fuel bundle, said simulated nuclear fuel bundle having in combination:
a plurality of parallel, vertically upstanding electrically activated heater rods simulative of nuclear fuel rods forming a simulated fuel rod bundle;
a plurality of spacers positioned at a plurality of vertically spaced locations along the simulated fuel rod bundle, said spacers each including a plurality of discrete elements about respective heater rods for locating the heater rods in said bundle, the elements of at least one of said spacers at one elevation thereof above a bottom spacer and in a simulated two-phase region of a nuclear reactor having a configuration tending to thicken a coolant film about the heater rods downstream of said one spacer, thereby minimizing or preventing the occurrence of boiling transition in said simulated two-phase region and simulating enhanced critical power performance for the fuel bundle, the elements of a spacer below said one spacer and in a simulated single-phase region of a simulated nuclear reactor having a configuration tending to promote high velocity of coolant flow locally about the heater rods immediately downstream thereof sufficiently to suppress any tendency of the heater rods at that elevation to be subject to simulated departure from nucleate boiling, the elements of said one spacer and said spacer below said one spacer being of different configuration.

14. A method of operating a simulated boiling water nuclear reactor having heater rod bundles, a plurality of heater rods in each bundle and spacers in each bundle at different elevations along said bundle comprising the steps of:
providing a spacer at one elevation along said bundle and in a simulated two-phase region of a nuclear reactor having spacer elements configured to promote the thickness of a coolant film about the heater rods downstream of the spacer at said one elevation; and
providing a spacer at an elevation along said bundle below said one elevation, and in a simulated single-phase region of the reactor, having spacer elements configured to promote high velocity of coolant flow locally about the heater rods immediately downstream thereof so that any tendency toward simulated departure from nucleate boiling is suppressed, the configurations of the spacers in said simulated single-phase and said simulated two-phase regions being different from one another.
